# EUROPÄISCHE PATENTSCHRIFT

(11) **EP 3 347 949 B1**
(45) Veröffentlichungstag und Bekanntmachung des Hinweises auf die Patenterteilung: **28.08.2019**
(21) Anmeldenummer: 16732295.7
(22) Anmeldetag: 27.06.2016
(51) Int. Cl.: H01R 4/62, B23K 9/20, H01R 4/64

(54) **MASSEANSCHLUSS FÜR EIN ALUMINIUMBAUTEIL**
EARTH CONNECTION FOR AN ALUMINIUM COMPONENT
BORNE DE MASSE POUR UNE PIÈCE EN ALUMINIUM

(30) Priorität: 11.09.2015 DE 102015217383
(43) Veröffentlichungstag der Anmeldung: 18.07.2018
(73) Patentinhaber: Bayerische Motoren Werke Aktiengesellschaft, 80809 München (DE)
(72) Erfinder: BRENNINGER, Gerhard, 84405 Schwindkirchen (DE)
(86) Internationale Anmeldenummer: PCT/EP2016/064810
(87) Internationale Veröffentlichungsnummer: WO 2017/041919

(56) Entgegenhaltungen:
- WO-A1-2014/172629
- DE-A1- 10 102 444
- DE-A1-102009 004 937

## Beschreibung

Die Erfindung bezieht sich auf einen Masseanschluss für ein Aluminium- insbesondere Karosseriebauteil, mit einem an diesem unter Zwischenlage eines flächig erweiterten Adapters befestigten Massebolzen aus einem bezüglich des Aluminiumbauteils höherfesten und in der elektrochemischen Spannungsreihe unterschiedlichen Material, insbesondere Stahl, und einem den Kabelschuh des Masseleiters auf einer korrespondierenden Kontaktfläche des Masseanschlusses festspannenden Gewindeelement.

Aus der DE 102 49 918 A1 ist ein Masseanschluss dieser Art für Aluminiumbauteile mit einem Massebolzen aus Stahl bekannt, bei dem zwischen Bolzen und Aluminiumbauteil ein Adapter in Form eines hülsenförmigen Abstandhalters aus einem mit dem Aluminiumbauteil kompatiblen Material, also vorzugsweise ebenfalls Aluminium, eingefügt ist. Mit dem Abstandhalter ist der Massebolzen form-und/oder reibschlüssig drehfest verbunden. Problematisch bei diesem bekannten Masseanschluss ist seine ausgeprägte Korrosionsanfälligkeit an der Schnittstelle zwischen Stahlbolzen und Aluminiumadapter und der sich ergebende, elektrische Übergangswiderstand zum Kabelschuh des Masseleiters für den zeitweise extrem hohen Stromdurchfluss von bis zu 1000 A oder mehr. Hinzukommt, dass das Gewindeelement mit einem bezogen auf die Baugröße sehr hohen Anzugsmoment festgeschraubt werden muss, um den Kabelschuh des Masseleiters mechanisch sicher mit dem Masseanschluss zu verspannen, die Form- und/oder Reibschlussverbindung des Massebolzens zum Aluminiumadapter aber materialbedingt begrenzt drehmomentenfest ist und daher dem geforderten Anzugsmoment häufig nicht

DE 101 02 444 A1 und DE 10 2009 004937 A1 offenbaren den Oberbegriff von Anspruch 1.

Aufgabe der Erfindung ist es, einen Masseanschluss der eingangs genannten Art so auszubilden, dass dieser auf fertigungstechnisch einfache Weise eine dauerhaft hohe Funktionssicherheit garantiert.

Diese Aufgabe wird erfindungsgemäß durch ein Aluminium-, insbesondere Karosseriebauteil mit einem Masseanschluss nach Anspruch 1 sowie ein Verfahren zur Herstellung eines solchen nach Anspruch 7 gelöst. Vorteilhafte Ausgestaltungen der Erfindung sind in den Unteransprüchen beschrieben.

Erfindungsgemäß wird die Funktionssicherheit des Masseanschlusses in mehrfacher Hinsicht deutlich verbessert. So werden die Lastfestigkeit des Masseanschlusses und damit das zulässige Anzugsmoment des Gewindeelements dadurch signifikant erhöht, dass die Schnittstelle zwischen Massebolzen und Adapter stoffschlüssig, also entweder, wie nach Anspruch 2 bevorzugt, einstückig oder nach Anspruch 3 als Schmelzschweißverbindung, ausgebildet und die Schnittstelle zwischen Adapter und Bauteil großflächig und als kombinierte, mit Aluminium als Zusatzwerkstoff bauteilseitige Schweiß- und mit der Zinkbeschichtung als Flussmittel adapterseitige Lötverbindung hochgradig lastfest gestaltet ist. Zugleich besitzt der Masseanschluss eine wesentlich verbesserte Korrosionsbeständigkeit, weil der Massebolzen und der Adapter materialgleich und daher ohne elektrochemische Spannungsdifferenz miteinander verbunden sind und der Adapter an der anderen Schnittstelle kontaktfrei zum Bauteil gehalten und der dazwischenliegende Spalt durch einen kontrollierten Werkstoffübergang in der Schweißlötverbindung überbrückt wird. Schließlich bietet der Masseanschluss auch einen sehr geringen elektrischen Übergangswiderstand, da zusätzlich zur hohen elektrischen Leitfähigkeit der verwendeten Werkstoffe auch die einzelnen Verbindungsstellen problemlos mit einem den geforderten Strombelastungen entsprechend großen Durchflussquerschnitt bemessen werden können. Darüberhinaus verfügt der erfindungsgemäße Masseanschluss über eine herstellungsmäßig einfache, seriengerechte und einbaugünstige Bauweise.

Eine weitere, fertigungstechnische Vereinfachung besteht nach Anspruch 4 darin, dass die Schweißlötverbindung als geradlinig zwischen dem Adapterrand und dem Bauteil durchlaufende Kehlnaht hergestellt ist.

Nach Anspruch 5 ist der Adapter vorzugsweise als parallel zur Flächenerstreckung des Bauteils über die Schweißlötverbindung hinaus frei auskragendes, am freien Ende mit dem Massebolzen verbundenes Adapterblech ausgebildet. Hierdurch werden einerseits bauteilseitig eingeleitete Vibrationen auf dem Weg über das schwingungsfähig angebundene Adapterblech gedämpft an den Massebolzen übertragen und andrerseits ein unmittelbarer Adapterkontakt mit dem Bauteil aus Korrosionsschutzgründen nicht nur an der Schweißlötverbindung, sondern auch an den übrigen Adapterflächen vermieden.

Sollte in einigen Anwendungsfällen, vor allem bei Anordnung des Masseanschlusses im Außenbereich eines Kraftfahrzeugs, die kontaktfreie Anbindung des Adapters am Bauteil in Kombination mit dem kontrollierten Werkstoffübergang an der Schweißlötverbindung für sich allein für einen dauerhaft wirksamen Korrosionsschutz nicht ausreichen, so kann der Masseanschluss nach Anspruch 6 zusätzlich mit einer Korrosionsschutzschicht überzogen werden.

Als besonders vorteilhaft hat sich erwiesen, die Schweißlötverbindung in einem Herstellungsverfahren nach Anspruch 7 im Wege der an sich bekannten Cold Metal Transfermethode mit wechselnder Polarität herzustellen und dabei, wie nach Anspruch 8 bevorzugt, den Polaritätswechsel nach Maßgabe der jeweiligen Werkstoffpaarung an der Schweißlötverbindung veränderlich zu gestalten.

Im Folgenden wird die Erfindung anhand zweier Ausführungsbeispiele in Verbindung mit den Figuren näher erläutert. Diese zeigen in stark schematisierter Darstellung:
- **Fig. 1a, b**: einen erfindungsgemäß ausgebildeten Masseanschluss in der Seiten- (a) und in der Aufsicht (b); und
- **Fig. 2a, b**: eine der Fig. 1 entsprechende Darstellung eines weiteren Ausführungsbeispiels der Erfindung, wiederum in der Seiten- (a) und in der Aufsicht (b).

Der in den Fign. gezeigte Masseanschluss dient zur mechanischen und elektrischen Verbindung des Kabelschuhs 1 eines elektrisch hoch belastbaren Masseleiters 2 mit einem Aluminiumbau- und insbesondere Karosserieteil 3 und enthält als Hauptbestandteile einen Massebolzen 4 aus Stahl und ein mit diesem verschraubtes Gewindeelement 5 in Form einer Schraubenmutter, welche entweder als Bundmutter und/oder unter Zwischenlage einer Sicherungsscheibe 6 mit einem hohen Anzugsmoment gegen den Kabelschuh 1 des Masseleiters 2 festgezogen wird, so dass dieser mit einer entsprechend hohen Vorspannkraft zwischen dem Gewindeelement 5 und einer korrespondierenden Kontaktfläche 7 des Massebolzens 4 gesichert wird.

Die elektrische und mechanische Verbindung des Massebolzens 4 am Aluminiumbauteil 3 erfolgt durch einen zwischengefügten Adapter 8 in Form eines verzinkten Stahlblechs, mit dessen einem Endabschnitt der Massebolzen 4 etwa im Wege einer Hubzündung großflächig und materialgleich - bei 9 - schmelzverschweißt ist. An dem dem Massebolzen 4 gegenüberliegenden Ende ist das Adapterblech 8 mit einem geradlinig profilierten Randabschnitt 10 versehen und durch eine Schweißlötverbindung 11 lastfest am Aluminiumbauteil 3 gesichert. Wesentlich dabei ist, dass das Adapterblech 8 auf der gesamten Unterseite zum Aluminiumbauteil 3 auf Abstand gehalten ist und der dazwischenliegende Spalt s bei Herstellung der Schweißlötverbindung 11 auch am Adapterrand 10 nicht verlorengeht, sondern durch diese nur ausgefüllt und überbrückt wird.

Hergestellt wird die Schweißlötverbindung 11 nach der Cold Metal Transfermethode mit Aluminium als Zusatzwerkstoff und wechselnder Polarität. Dabei ergibt sich ein kontrollierter Werkstoffübergang mit einer großflächigen Schmelzschweißanbindung auf Seiten des Aluminiumbauteils 3 und einer ebenfalls großflächigen Lötanbindung mit der Zinkbeschichtung als Flussmittel auf Seiten des entsprechend profilierten Adapterrandes 10. Für verschiedenartige Aluminium/Stahlpaarungen kann der Polaritätswechsel des Cold Metal Transferprozesses veränderlich einstellbar sein.

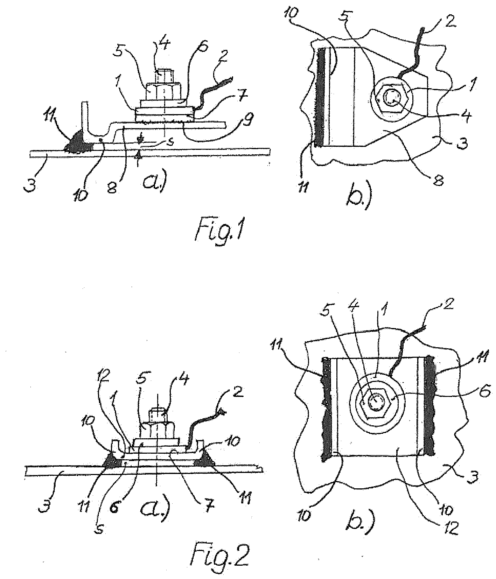

Der in Fig. 2 dargestellte Masseanschluss, in welcher die dem ersten Ausführungsbeispiel entsprechenden Komponenten durch das gleiche Bezugszeichen gekennzeichnet sind, unterscheidet sich von diesem in erster Linie dadurch, dass der Adapter 8 als flächig erweiterte Tragplatte 12 einstückig am Massebolzen 4 angeformt und beidseitig jeweils durch eine Schweißlötverbindung 11 an den wiederum verzinkten und geradlinig profilierten Außenrändern 10 am Aluminiumbauteil 3 befestigt ist, wobei das Randprofil erneut so gewählt ist, dass auf Seiten der Tragplatte 12 eine großflächige Lötanbindung entsteht. Auch bei diesem Ausführungsbeispiel wird die Tragplatte 12 bei der Herstellung der Schweißlötverbindungen 11 in einem zur Vermeidung von Korrosionserscheinungen ausreichend großen Abstand zum Bauteil 3 gehalten, so dass in dem dazwischenliegenden Spalt s an den Tragplattenrändern 10 wiederum ein kontrollierter Werkstoffübergang in den Schweißlötverbindungen 11 ohne unmittelbaren Bauteilkontakt entsteht. Im Übrigen ist die Bau- und Funktionsweise die gleiche wie beim oben beschriebenen Ausführungsbeispiel.

Erforderlichenfalls kann die Korrosionsbeständigkeit der beschriebenen Masseanschlüsse vor allem bei deren Verwendung im Außenbereich unter rauen Betriebsbedingungen noch dadurch verbessert werden, dass diese nachträglich zumindest im Bereich ihrer Schweißlötverbindungen 11 mit einer Korrosionsschutzschicht überzogen werden.

Im Rahmen der Erfindung sind zahlreiche Abwandlungen möglich. So können der Massebolzen 4 und/oder der Adapter 8 anstatt aus Stahl auch aus anderen, miteinander gut schmelzschweißbaren Materialien bestehen. Weiterhin lässt sich der Masseanschluss unabhängig von seinem elektrischen Leitvermögen auch zur rein mechanischen Befestigung eines mit Aluminium unverträglichen Einbauteils an einem Karosserieteil aus Aluminium verwenden.

### Bezugszeichenliste

- 1: Kabelschuh
- 2: Masseleiter
- 3: Aluminiumbauteil
- 4: Massebolzen
- 5: Gewindeelement
- 6: Sicherungsscheibe
- 7: Kontaktfläche
- 8: Adapter
- 9: Schmelzschweißverbindung
- 10: Adapterrand
- 11: Schweißlötverbindung
- 12: Adapterplatte
- s: Spalt

## Patentansprüche

1. Aluminium-, insbesondere Karosseriebauteil (3) mit einem Masseanschluss, der Masseanschluss umfassend einen flächig erweiterten Adapter (8; 12) und einen Massebolzen (4) aus einem bezüglich des Aluminiumbauteils (3) höherfesten und in der elektrochemischen Spannungsreihe unterschiedlichen Material, insbesondere Stahl, der unter Zwischenlage des Adapters (8; 12) an dem Aluminiumbauteil (3) befestigt ist, sowie ein Gewindeelement (5), das ausgebildet ist, einen Kabelschuh (1) eines Masseleiters (2) auf einer korrespondierenden Kontaktfläche (7) des Massebolzens festzuspannen, wobei der Massebolzen (4) und der Adapter (8; 12) aus korrosionsfest aufeinander abgestimmten Materialien bestehen und stoffschlüssig miteinander verbunden sind, **dadurch gekennzeichnet, dass** der Adapter (8; 12) zumindest bauteilseitig verzinkt und in einer kontaktfreien Position zum Aluminiumbauteil (3) durch eine mit Aluminium als Zusatzwerkstoff hergestellte Schweißlötverbindung (11) großflächig am Aluminiumbauteil (3) befestigt ist.

2. Aluminium-, insbesondere Karosseriebauteil (3) mit einem Masseanschluss nach Anspruch 1, **dadurch gekennzeichnet, dass** der Adapter (12) einstückig am Massebolzen (4) angeformt ist.

3. Aluminium-, insbesondere Karosseriebauteil (3) mit einem Masseanschluss nach Anspruch 1, **dadurch gekennzeichnet, dass** der Adapter (8) getrennt vom Massebolzen (4) vorgefertigt und verzinkt und anschließend mit diesem verschweißt ist.

4. Aluminium-, insbesondere Karosseriebauteil (3) mit einem Masseanschluss nach einem der Ansprüche 1 bis 3, **dadurch gekennzeichnet dass**
die Schweißlötverbindung (11) aus einer durchgehend am verzinkten Adapterrand (10) verlaufenden Kehlnaht besteht.

5. Aluminium-, insbesondere Karosseriebauteil (3) mit einem Masseanschluss nach Anspruch 4, **dadurch gekennzeichnet dass** der Adapter (8) als parallel zur Flächenerstreckung des Aluminiumbauteils (3) über die Schweißlötverbindung (11) frei auskragendes, am freien Ende mit dem Massebolzen (4) verbundenes Adapterblech ausgebildet ist.

6. Aluminium-, insbesondere Karosseriebauteil (3) mit einem Masseanschluss nach einem der vorhergehenden Ansprüche, **dadurch gekennzeichnet dass** der Adapter (8; 12) und das Aluminiumbauteil (3) zumindest im Bereich der Schweißlötverbindung (11) mit einer Korrosionsschutzschicht überzogen sind.

7. Verfahren zur Herstellung eines Aluminium-, insbesondere Karosseriebauteils (3) mit einem Masseanschluss nach einem der Ansprüche 1 bis 6, wobei ein Massebolzen (4) aus einem bezüglich des Aluminiumbauteils (3) höherfesten und in der elektrochemischen Spannungsreihe unterschiedlichen Material, insbesondere Stahl, und ein flächig erweiterter Adapter (8; 12) aus korrosionsfest aufeinander abgestimmten Materialien bestehen und stoffschlüssig miteinander verbunden sind, **dadurch gekennzeichnet, dass**
der Adapter (8; 12) zumindest bauteilseitig verzinkt und in einer kontaktfreien Position zum Aluminiumbauteil (3) durch eine mit Aluminium als Zusatzwerkstoff hergestellte Schweißlötverbindung (11) großflächig am Aluminiumbauteil (3) befestigt wird, wobei die Schweißlötverbindung (11) im Wege des Cold Metal Transfers mit wechselnder Polarität hergestellt wird.

8. Verfahren nach Anspruch 7, **dadurch gekennzeichnet dass** der Polaritätswechsel nach Maßgabe der Werkstoffpaarung von Aluminiumbauteil (3) und Adapter (8; 12) veränderlich eingestellt wird.

## Claims

1. An aluminium component, especially vehicle body component (3) with an earth connection, the earth connection comprising a two-dimensionally extended adapter (8; 12) and an earthing bolt (4) made of a material which is of greater strength with respect to the aluminium component (3) and differs in electrochemical series, especially steel, which is fastened to the aluminium component (3) with the interposition of the adapter (8; 12), and also a threaded element (5) which is designed to clamp a cable lug (1) of an earth conductor (2) on a corresponding contact face (7) of the earthing bolt, wherein the earthing bolt (4) and the adapter (8; 12) consist of materials which are matched to each other so as to resist corrosion and are connected together by a material-formed bond, **characterised in that** the adapter (8; 12) is zinc-plated at least on the component-side and is fastened, in a position free from contact with the aluminium component (3), over a large surface on the aluminium component (3) by a welded/soldered join (11) produced with aluminium as filler material.

2. An aluminium component, especially vehicle body component (3) with an earth connection according to Claim 1, **characterised in that**
the adapter (12) is formed in one piece on the earthing bolt (4).

3. An aluminium component, especially vehicle body component (3) with an earth connection according to Claim 1, **characterised in that**
the adapter (8) is prefabricated and zinc-plated separately from the earthing bolt (4) and then is welded thereto.

4. An aluminium component, especially vehicle body component (3) with an earth connection according to one of Claims 1 to 3, **characterised in that** the welded/soldered join (11) consists of a fillet weld running continuously on the zinc-plated adapter edge (10).

5. An aluminium component, especially vehicle body component (3) with an earth connection according to Claim 4, **characterised in that**
the adapter (8) is designed as an adapter plate freely projecting over the welded/soldered join (11) parallel to the surface extent of the aluminium component (3), and connected at the free end to the earthing bolt (4).

6. An aluminium component, especially vehicle body component (3) with an earth connection according to one of the preceding claims, **characterised in that**
the adapter (8; 12) and the aluminium component (3) at least in the region of the welded/soldered join (11) are coated with an anticorrosion layer.

7. A method for producing an aluminium component, especially vehicle body component (3), with an earth connection according to one of Claims 1 to 6, wherein an earthing bolt (4) made of a material which is of greater strength with respect to the aluminium component (3) and differs in electrochemical series, especially steel, and a two-dimensionally extended adapter (8; 12) consist of materials which are matched to each other so as to resist corrosion and are connected together by a material-formed bond, **characterised in that** the adapter (8; 12) is zinc-plated at least on the component-side and fastened, in a position free from contact with the aluminium component (3), over a large surface on the aluminium component (3) by a welded/soldered join (11) produced with aluminium as filler material, wherein the welded/soldered join (11) is produced by way of cold metal transfer with changing polarity.

8. A method according to Claim 7, **characterised in that**
the change in polarity is set variably according to the material pairing of aluminium component (3) and adapter (8; 12).

## Revendications

1. Composant en aluminium, en particulier composant de carrosserie (3) ayant une borne de terre, la borne de terre comprenant un adaptateur (8 ; 12) s'étendant à plat et une vis de terre (4) en un matériau plus résistant et ayant une plage de tension électrochimique différente par rapport au composant (3) en aluminium, en particulier en acier qui est fixé avec interposition de l'adaptateur (8 ; 12) sur le composant en aluminium (3), ainsi qu'un élément fileté (5) qui est réalisé pour serrer une cosse de câble (1) d'un conducteur de terre (2) sur une surface de contact correspondante (7) de la vis de terre,
la vis de terre (4) et l'adaptateur (8 ; 12) étant réalisés en des matériaux résistant à la corrosion adaptés l'un à l'autre, et étant reliés l'un à l'autre par une liaison par la matière,
**caractérisé en ce que**
l'adaptateur (8 ; 12) est galvanisé au moins du côté du composant, et est fixé par une grande surface sur le composant en aluminium (3), dans une position exempte de contact avec ce composant en aluminium (3) par un joint de soudure (11) réalisé avec de l'aluminium en tant que matériau d'addition.

2. Composant en aluminium, en particulier composant de carrosserie (3) ayant une borne de terre conforme à la revendication 1,
**caractérisé en ce que**
l'adaptateur (12) est formé en une seule pièce sur la vis de terre (4).

3. Composant en aluminium, en particulier composant de carrosserie (3) ayant une borne de terre conforme à la revendication 1,
**caractérisé en ce que**
l'adaptateur (8) est préfabriqué séparément de la vis de terre (4) et galvanisé puis soudé avec celle-ci.

4. Composant en aluminium, en particulier composant de carrosserie (3) ayant une borne de terre conforme à l'une des revendications 1 à 3,
**caractérisé en ce que**
le joint de soudure (11) est constitué par une soudure d'angle s'étendant sur la totalité du bord de l'adaptateur (10) galvanisé.

5. Composant en aluminium, en particulier composant de carrosserie (3) ayant une borne de terre conforme à la revendication 4,
**caractérisé en ce que**
l'adapteur (8) est réalisé sous la forme d'une tôle d'adaptateur reliée à son extrémité libre à la vis de terre (4) s'étendant parallèlement à l'extension de la surface du composant en aluminium (3) et venant librement en saillie sur le joint de soudure (11).

6. Composant en aluminium, en particulier composant de carrosserie (3) ayant une borne de terre conforme à l'une des revendications précédentes,
**caractérisé en ce que**
l'adaptateur (8 ; 12) et le composant en aluminium (3) sont revêtus d'une couche anticorrosion au moins dans la zone du joint de soudure (11).

7. Procédé d'obtention d'un composant en aluminium, en particulier d'un composant de carrosserie (3) ayant une borne de terre conforme à l'une des revendications 1 à 6,
selon lequel la vis de terre (4) réalisée en un matériau plus résistant et ayant une plage de tension électrochimique différente par rapport au composant en aluminium (3), en particulier en acier et un adaptateur (8 ; 12) s'étendant à plat, réalisés en des matériaux résistant à la corrosion adaptés l'un à l'autre et sont reliés par une liaison par la matière,
**caractérisé en ce que**
l'adaptateur (8 ; 12) est galvanisé au moins du côté du composant et est fixé par une grande surface sur le composant en aluminium (3) dans une position exempte de contact avec ce composant en aluminium (3) par un joint de soudure (11) réalisé avec de l'aluminium en tant que matériau d'addition, et le joint de soudure (11) est obtenue avec une polarité alternante dans le cadre d'un procédé de transfert de métal à froid.

8. Procédé conforme à la revendication 7,
**caractérisé en ce que**
l'inversion de polarité est réglée de façon différente selon la condition d'appariement des matériaux du composant en aluminium (3) et de l'adaptateur (8 ; 12).
